# EUROPÄISCHE PATENTSCHRIFT

(11) **EP 0 625 950 B1**
(45) Veröffentlichungstag und Bekanntmachung des Hinweises auf die Patenterteilung: **12.03.1997**
(21) Anmeldenummer: 94900705.8
(22) Anmeldetag: 15.12.1993
(51) Int. Cl.: B65D 41/34, B29C 45/14

(54) **GARANTIEVERSCHLUSS UND VERFAHREN ZUM HERSTELLEN EINES GARANTIEVERSCHLUSSES**
WARRANTY CLOSURE AND METHOD OF MANUFACTURING IT
FERMETURE DE GARANTIE ET PROCEDE PERMETTANT DE FABRIQUER UNE FERMETURE DE CE TYPE

(30) Priorität: 22.12.1992 CH 3900/92
(43) Veröffentlichungstag der Anmeldung: 30.11.1994
(73) Patentinhaber: Crown Cork AG, 4153 Reinach (CH)
(72) Erfinder: KIRCHGESSNER, Michael, D-79588 Efringen-Kirchen (DE); HERRMANN, Klaus-Jürgen, D-79595 Rümmingen (DE); OLK, Oliver, D-79618 Rheinfelden (DE)
(74) Vertreter: Hepp, Dieter
(86) Internationale Anmeldenummer: CH9300281
(87) Internationale Veröffentlichungsnummer: WO9414672

(56) Entgegenhaltungen:
- EP-A- 0 273 858
- WO-A-89/10875
- DE-A- 4 034 079
- GB-A- 1 595 692
- GB-A- 2 186 272
- US-A- 5 135 123

## Beschreibung

Die Erfindung betrifft einen Garantieverschluss zum Verschliessen eines Behälters gemäss Oberbegriff von Patentanspruch 1 und ein Verfahren zum Herstellen eines Garantieverschlusses gemäss Oberbegriff von Anspruch 13.

Derartige Garantieverschlüsse und Verfahren zu ihrer Herstellung sind in Vielzahl bekannt und gebräuchlich. Bei den bekannten Garantieverschlüssen ist meist eine Kunststoff-Verschlusskappe einstückig mit einem Garantieband versehen, das beim Verschliessen eines Behälters mit diesem kraft- und/oder formschlüssig in Eingriff bringbar ist. Das Garantieband rastet dabei entweder mit einem Vorsprung, einer Rille oder einer anderen Form der Hinterschneidung am Behälterhals ein oder es wird warm verformt und im Durchmesser reduziert, um mit dem Behälterhals in Eingriff gebracht zu werden. Solche Verschlüsse sind z.B. aus den US-Patenten 4,033,472 (Aichinger), 3,673,761 (Leitz) oder 3,929,246 (Leitz) bekannt.

Es wurde auch bereits vorgeschlagen, Verschlusskappe und Garantieband für derartige Garantieverschlüsse separat herzustellen und das Garantieband nachträglich mit der Verschlusskappe zu verkleben, zu verschweißen oder formschlüssig an einer Hinterschneidung in der Verschlusskappe einzurasten. Derartige Verschlüsse sind z.B. aus der US-PS-5,135,123 (Nairn et al.), der DE-C2-33 30 219 (Whitney et al.), der DE-A1-27 03 404 (Grussen), der US-PS-4,919,285 (Roof et al.) oder der EP-A1-273 858 (Dubach et al) bekannt.

In der Praxis hat sich gezeigt, dass sich Verschlüsse mit nachträglich angeklebten Garantiebändern vor allem im Hinblick auf Herstellverfahren und definierte Verbindung zwischen Verschlusskappe und Garantieband nicht bewährt haben. Garantieverschlüsse mit mechanisch eingerastetem Garantieband haben sich nur bei Metallverschlüssen durchsetzen können, die nachträglich mit einem Kunststoff-Garantieband ausgerüstet werden.

Der Erfindung liegt die Aufgabe zugrunde, die Nachteile des Bekannten zu vermeiden, insbesondere also einen Garantieverschluss und ein Verfahren zum Herstellen eines Garantieverschlusses zu schaffen, bei dem einerseits für Garantieband und Verschlusskappe verschiedene Materialien entsprechend den unterschiedlichen Anforderungen einsetzbar sind und bei der andererseits eine definierte Verbindungsstelle zwischen Verschlusskappe und Garantieband gewährleistet ist, aber womit auch definierte, innerhalb eines engen Toleranzbereichs vorherbestimmbare Abreiss-Kräfte beim Öffnen des Garantieverschlusses eingehalten werden können. Ausserdem soll wirtschaftliche Herstellung gewährleistet werden.

Erfindungsgemäss werden diese Aufgaben gemäss Kennzeichen der oben genannten Patentansprüche gelöst.

Dadurch, dass das Garantieband als separates Teil an die Verschlusskappe durch eingießverfahren angeformt ist, lässt sich eine Vielzahl von Vorteilen und Funktionen erreichen. So kann z.B. das Garantieband aus einem elastischeren Material gefertigt werden, als die Verschlusskappe, um bei mechanischen Garantiebändern ein besseres Aufschraub-Verhalten zu gewährleisten. Zum Augießen des Garantiebands besonders geeignet sind vor allem Spritzgussverfahren und Compression Molding Verfahren.

Bei diesen Verfahren lässt sich durch Formgebung, Verbindungsfläche, Oberfläche des Bereichs der Verschlusskappe, an welcher das Garantieband angespritzt wird und Materialauswahl sowie Verarbeitungstemperatur exakt vorherbestimmen, wie stark die Haftkräfte im Bereich der Verbindungsstellen zwischen Garantieband und Verschlusskappe sind. Auf diese Weise lässt sich der erfindungsgemässe Garantieverschluss besonders vorteilhaft gestalten, wenn die Verbindungsstellen zwischen Garantieband und Verschlusskappe als Sollreiss-Linie des Garantiebands ausgebildet sind. Eine besonders stabile Verbindung lässt sich dabei erreichen, wenn das Garantieband entlang einer Linie mit der Verschlusskappe verbunden ist. Das Garantieband kann aber auch mit einzelnen Stegen an die Verschlusskappe angeformt werden.

Eine besonders vorteilhafte Ausführungsform ergibt sich, wenn das Garantieband an wenigstens einer Verbindungsstelle durch eine Hinterschneidung mit der Verschlusskappe verbunden ist. Eine derartige Hinterschneidung lässt sich einsetzen, um z.B. bei der Verwendung dünner Garantiestege diese mit der Verschlusskappe besser zu verbinden. Die Hinterschneidungen lassen sich aber auch so ausbilden, dass z.B. einer der Stege oder ein Abschnitt des Garantiebands dauerhaft fest mit der Verschlusskappe verbunden bleibt.

Die Funktion der Verbindungsstelle oder der Verbindungsstellen zwischen Verschlusskappe und Garantieband lässt sich weiter optimieren, wenn diese schräg zur Kappen-Längsachse verlaufen, so dass beim Aufschrauben eines Verschlusses mit mechanischem Garantieband die vom Garantieband über die Verbindungsstelle oder die Verbindungsstellen auf die Verschlusskappe ausgeübte Kraft etwa in Längsrichtung der Verbindungsstelle und/oder im wesentlichen parallel zur Verbindungsstelle gerichtet ist. Es hat sich nämlich gezeigt, dass sich auf diese Weise besonders einfach ein vorzeitiges Abreissen oder Abscheren des Garantiebands beim Verschliessen vermeiden lässt.

Beim Einsatz von Verbindungsstegen hat sich eine Winkelanordnung der Verbindungsstege zwischen 30° bis 60° besonders bewährt.

Die Stege werden besonders gut gegen Abscheren beim Aufschrauben geschützt, wenn sie in einer Ausnehmung in der Wand der Verschlusskappe angeordnet sind. Dabei haben sich auch Stützflächen zum Abstützen der Verbindungsstege gegen Ablösung oder Deformation beim Aufbringen bewährt.

Die Manipulationssicherheit derartiger Garantieverschlüsse lässt sich verbessern, wenn an der Schraubkappe und/oder am Verbindungssteg eine Einkerbung in der Verbindungsfläche zur Förderung des Abreissvorgangs beim Öffnen der Verschlusskappe vorgesehen ist. Die Kerbe kann derart plaziert sein, dass Zugkräfte beim Öffnen der Verschlusskappe sofort ein Weiterreissen der in Verlängerung der Kerbe verlaufenden Verbindungsstelle bewirken.

Die Erfindung ist im folgenden in Ausführungsbeispielen anhand der Zeichnungen näher erläutert. Es zeigen:
- Figur 1: die schematische Darstellung eines Schnitts durch einen Garantieverschluss mit den Merkmalen der Erfindung längs der Linie A-A in Figur 2,
- Figur 2: eine Ansicht des Garantieverschlusses gemäss Figur 1 von unten,
- Figur 3: ein abgewandeltes Ausführungsbeispiel eines Garantieverschlusses im Schnitt analog Figur 2,
- Figur 3a: die Verschlusskappe gemäss Figur 3 ohne Garantieband,
- Figur 4: ein abgewandeltes Ausführungsbeispiel eines Garantieverschlusses mit Verbindungsstegen zwischen Verschlusskappe und Garantieband in Seitenansicht,
- Figur 5: einen Ausschnitt aus einem abgewandelten Garantieverschluss,
- Figur 6: den Garantieverschluss gemäss Figur 5 während der Trennung von Garantieband und Verschlusskappe,
- Figur 7: einen Ausschnitt durch ein weiter abgewandeltes Ausführungsbeispiel,
- Figur 8: den Garantieverschluss gemäss Figur 7 im Moment der Trennung von Garantieband und Verschlusskappe,
- Figur 9: die Darstellung eines Schnitts längs der Linie A-A in Figur 7,
- Figur 10: ein Ausführungsbeispiel analog Figur 9 mit abgewandelter Verbindungsstelle zwischen Garantieband und Verschlusskappe,
- Figur 11: eine weiter abgewandelte Verbindungsstelle zwischen Verschlusskappe und Garantieband, und
- Figur 12: ein Ausführungsbeispiel mit abgewandelter Verbindungsstelle bei einem warm verformbaren oder schrumpfbaren Garantieband.

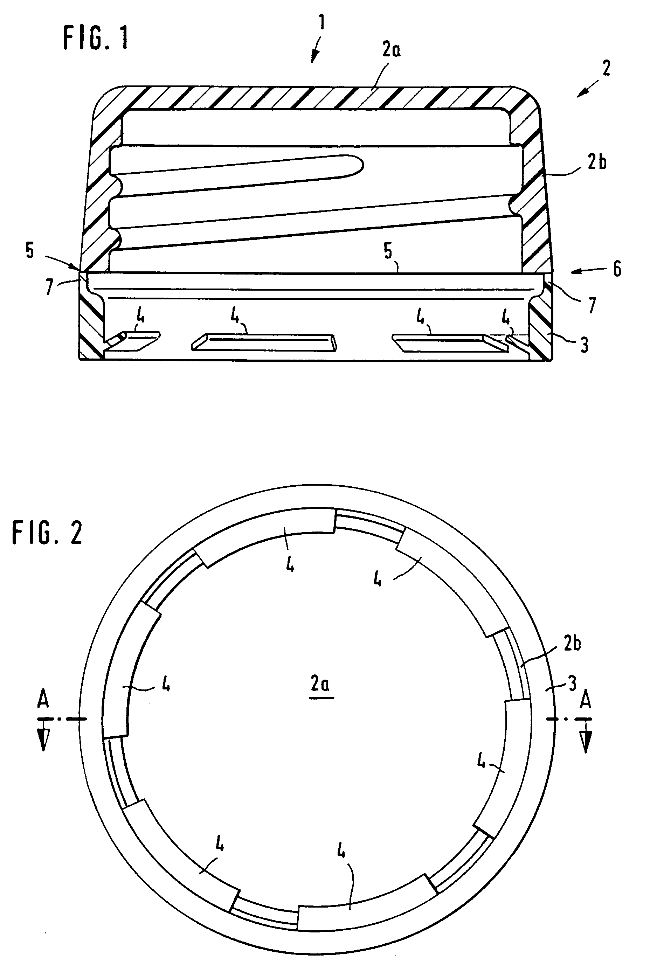

Gemäss Figur 1 besteht ein Garantieverschluss 1 aus einer Kunststoff-Verschlusskappe 2 mit Kappenboden 2a und Kappen-Mantel 2b sowie einem Garantieband 3. Die Verschlusskappe 2 ist im Spritzgussverfahren aus Polypropylen (PP) hergestellt. Es handelt sich dabei um ein handelsübliches Material mit einem E-Modul (Elastizitätsmodul) von 1200.

Das Garantieband 3 besteht aus einem Polypropylen (PE) das elastischer ist, als das Material der Verschlusskappe 2 und einen Elastizitätsmodul von 900 aufweist. Durch die höhere Elastizität des Garantiebands 3 wird sichergestellt, dass es sich beim Aufsetzen auf einen Behälter, wenn die Rückhalte-Elemente 4 über den Behälterhals gedrückt werden, elastisch aufweiten kann. Zum Herstellen des Garantieverschlusses 1 wurde die Verschlusskappe 2 in die Kavitäten eines Spritzgusswerkzeuges eingelegt und das Garantieband 3 nachträglich angespritzt. Die Verbindungsstelle 5 zwischen Verschlusskappe 2 und Garantieband 3 verläuft ringförmig um den gesamten unteren Rand der Verschlusskappe 2. Die Verbindungsstelle 5 ist bei einem Garantieverschluss für Getränkeflaschen mit 28 mm Mündungsdurchmesser etwa 1 mm breit. Die Oberflächenrauhigkeit der Verschlusskappe 2 im Bereich der Verbindungsstelle 5 beträgt vor dem Anspritzen des Garantiebands 3 etwa 0.025 bis 1,6µm.

Die Verbindungsstelle 5 lässt sich auf diese Weise ausreichend fest gestalten, um ein Abtrennen des Garantiebands 3 beim erstmaligen Aufschrauben auf einen Behälterhals zu vermeiden. Anderseits bewirken Zugkräfte auf das Garantieband 3 in Axialrichtung der Verschlusskappe 2 relativ schnell ein Ablösen des Garantiebands 3. Die Verbindungsstelle 5 wirkt damit als Sollreiss-Linie 6 zwischen Verschlusskappe 2 und Garantieband 3.

Garantieband 3 und Verschlusskappe 2 sind ausserdem unterschiedlich eingefärbt, so dass eine Beschädigung der Verbindungsstelle 5 optisch hervorgehoben wird.

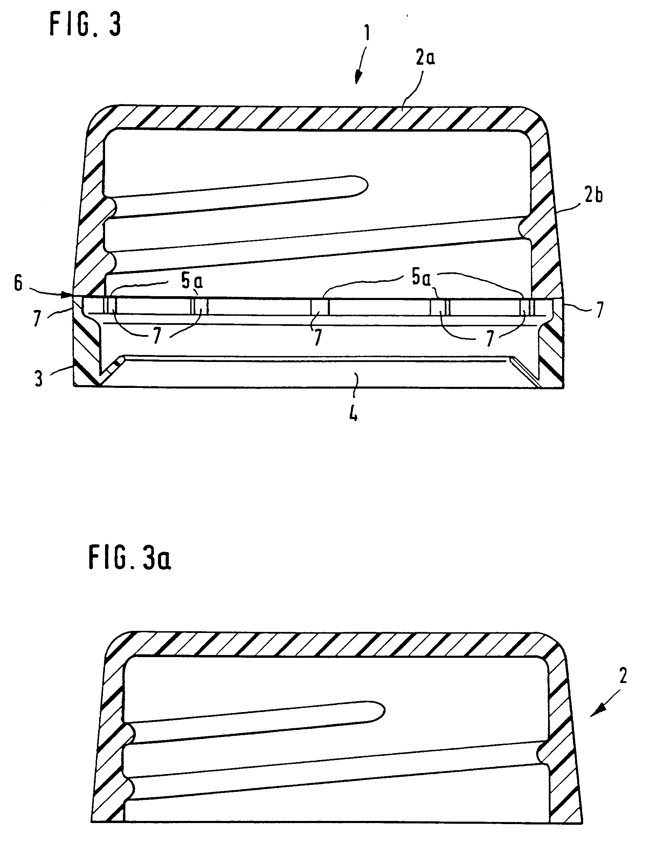

Beim Ausführungsbeispiel gemäss Figur 3 weist das Garantieband 3 eine Mehrzahl von Verbindungsstegen 7 auf, die ihrerseits an Verbindungsstellen 5a an die Verschlusskappe 2 angespritzt sind. Die Verbindungsstellen 5a reissen wesentlich leichter auf, als die Verbindungsstelle 5 gemäss Figur 1. Um deshalb eine Beschädigung der Verbindungsstellen 5a beim Aufschrauben auf einen Behälterhals zu vermeiden, ist das Rückhalte-Element 4 als ausserordentlich elastische, dünne Membran ausgebildet.

Die Verschlusskappe 2 gemäss Figur 3 und Figur 3a ist im Spritzgussverfahren hergestellt. Zum Anbringen des Garantiebands 3 wurde die Verschlusskappe gemäss Figur 3a in ein Compression Molding Werkzeug eingelegt und das Garantieband 3 sodann warm angeformt.

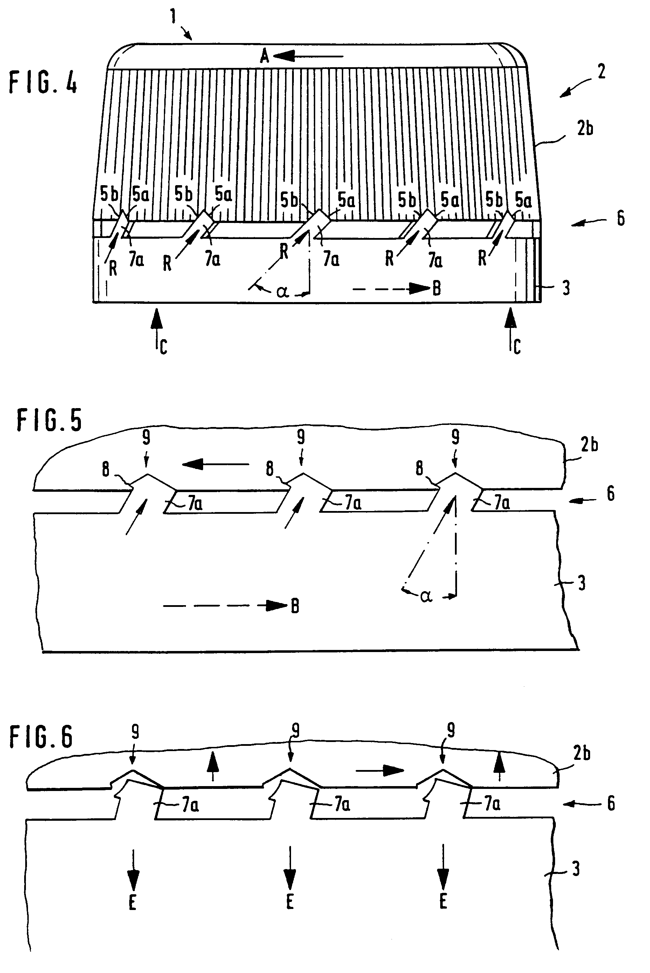

Beim Ausführungsbeispiel gemäss Figur 4 sind analog Figur 3 eine Vielzahl von Verbindungsstegen 7a vorgesehen, welche das Garantieband 3 mit der Verschlusskappe 2 verbinden. Beim Aufschrauben des Garantieverschlusses 1 auf einen (nicht dargestellten) Behälterhals wird die Verschlusskappe 1 in Richtung des Pfeils A gedreht. Sobald das oder die Rückhalte-Elemente 4 (Figur 1 bis 3) mit entsprechenden Sperr-Elementen am Behälterhals in Eingriff gelangen, wirkt eine Kraft in Richtung der Pfeile C auf das Garantieband 3, bis die Rückhalte-Elemente 4 über die entsprechende Sperrfläche in bekannter Weise am Behälterhals gerastet sind. Ausserdem wirkt auf das Garantieband 3 eine Kraft in Richtung des Pfeils B, die aus der Reibung zwischen den Rückhalte-Elementen 4 und entsprechenden Sperr-Elementen am Behälterhals herrührt. Aus den Kräften in Richtung B und C ergeben sich resultierende Kräfte in Richtung der Pfeile R in den einzelnen Verbindungsstegen 7a. Um ein Ablösen der Verbindungsstellen 5a und 5b zwischen den Stegen 7a und der Verschlusskappe 2 während des Aufschraubens zu vermeiden, verläuft die Verbindungstelle 5a etwa senkrecht zur resultierenden Kraft in Richtung des Pfeils R. Die Verbindungsstelle 5a wird demnach beim Verschliessen des Behälters praktisch nur auf Druck beansprucht. Die Verbindungsstelle 5b verläuft dagegen etwa parallel zur resultierenden Kraft in Richtung des Pfeils R. Ein Ablösen der Verbindungsstellen 5a und 5b wird dadurch zuverlässig vermieden. Die Stege 7a sind beim Ausführungsbeispiel gemäss Figur 3 etwa unter einem Winkel α von 45° zur Längsachse der Verschlusskappe 2 abgewinkelt. Je nach Anwendungsfall, d.h. Druck- und Reibungsverhältnissen, haben sich in der Praxis Winkel zwischen 20° und 45° besonders gut bewährt.

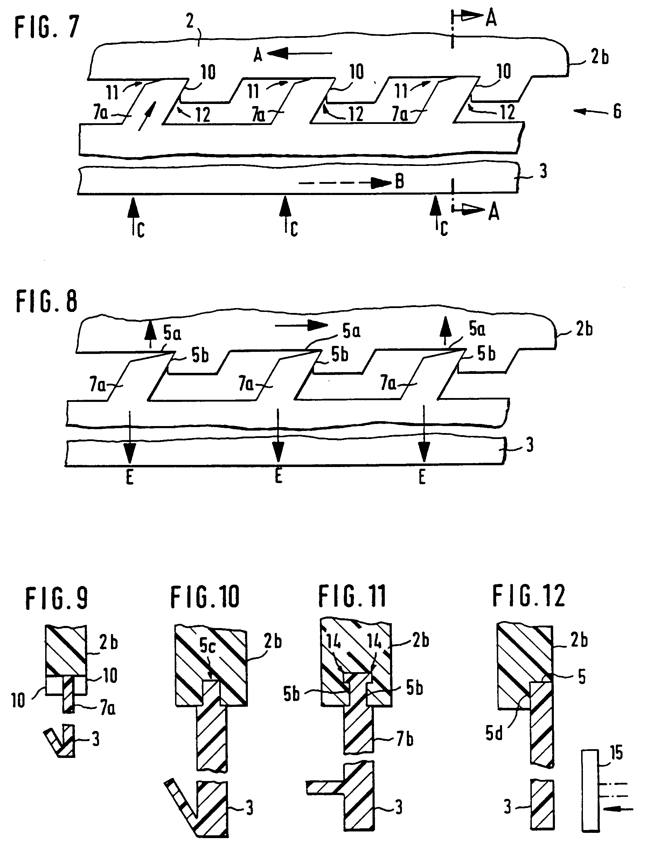

Figur 5 und 6 zeigen ein Ausführungsbeispiel mit schräggestellten Verbindungsstegen 7a analog Figur 4 im Ausschnitt und in Vergrösserung. Um die Verbindung zwischen den Stegen 7a und der Verschlusskappe 2 zu verbessern, sind in der Wand der Verschlusskappe 2 Hinterschneidungen 8 vorgesehen, in welche die Stege 7a eingespritzt sind und somit mit Formschluss greifen. Das Garantieband 3 ist dadurch relativ stabil mit der Schraubkappe 2 verbunden.

Sobald jedoch beim Öffnen des Garantieverschlusses Kräfte in Richtung der Pfeile E durch das Garantieband 3 auf die Stege 7a übertragen werden, lösen sich die Stege 7a schräg aus den Hinterschneidungen 8, so dass sich das Garantieband 3 von der Verschlusskappe 2 trennen lässt. Da sich die Ausnehmung 9, in welche jeder der Stege 7a eingespritzt ist, nach unten erweitert, lassen sich die Stege 7a relativ leicht von der Verschlusskappe 2 trennen, sobald sie sich aus den Hinterschneidungen 8 gelöst haben.

Beim Ausführungsbeispiel gemäss Figur 7 bis 9 sind die Stege 7a durch seitliche Stützflächen 10 am unteren Rand der Verschlusskappe 2 abgestützt. Die Stützflächen 10 wirken der beim erstmaligen Aufsetzen des Garantieverschlusses auf einen Behälter in Richtung des Pfeils B wirkenden Kraft entgegen und verhindern, dass die Verbindungsstege 7a beim Aufsetzen von der Verschlusskappe 2 getrennt werden.

Andererseits sind an den Verbindungsstegen 7a Kerben 11 vorgesehen. Sobald beim Öffnen des Garantieverschlusses gemäss Figur 8 eine Kraft in Richtung der Pfeile E auf die Verbindungsstege 7a wirkt, lösen sich die Verbindungsstellen 5a von den Kerben 11 her. Selbstverständlich könnten die Kerben 11a auch als Ausnehmungen in der Wand der Schraubkappe 2 analog den Kerben 12 vorgesehen sein.

Figur 10 zeigt ein Ausführungsbeispiel, bei welchem eine Verbindungsstelle 5c als U-förmige Ausnehmung im Mantel 2b der Verschlusskappe 2 ausgebildet ist. Auf diese Weise lässt sich eine relativ grossflächige, vor allem gegen Querkräfte stabile Verbindung von Garantieband 3 und Verschlusskappe 2 erreichen. Bei Zugbeanspruchung in Richtung des Pfeils C während des Öffnens des Garantieverschlusses, lässt sich das Garantieband 3 jedoch ohne weiteres von der Verschlusskappe 2 trennen.

Figur 11 zeigt ein Ausführungsbeispiel, bei welchem ein Steg 7b eines Garantiebands 3 mittels zwei Hinterschneidungen 14 fest mit dem Mantel 2b der Verschlusskappe 2 verbunden ist. Eine solche Konstruktion ist vor allem dann nützlich, wenn Garantieband 3 und Verschlusskappe 2 an einer Stelle derart dauerhaft miteinander verbunden werden sollen, dass das Garantieband 3 an der Verschlusskappe 2 auch nach dem Öffnen hängen bleibt.

Figur 12 zeigt ein Ausführungsbeispiel, bei welchem ein warm verformbares Garantieband entlang einer zylindrischen, umlaufenden inneren Verbindungsstelle 5d und einer kreisringförmigen Verbindungsstelle 5 (analog Figur 1 und 2) mit der Verschlusskappe 2 verbunden ist. Die Verbindungsstelle 5d gewährleistet vor allem, dass sich das Garantieband beim Aufschrumpfen und/oder Anpressen durch schematisch dargestellte Anpressbacken 15 nicht von der Verschlusskappe 2 löst.

Selbstverständlich lassen sich Konstruktionselemente der einzelnen Ausführungsbeispiele miteinander kombinieren oder austauschen, ohne dass dadurch der Rahmen der Erfindung verlassen würde. So kann z.B. ein mit Hinterschneidungen 14 versehener Verbindungssteg 7b gemäss Figur 11 bei jeder der Varianten gemäss Figur 3 bis 10 oder 12 vorgesehen werden. Auch lassen sich die Querschnitts-Konfigurationen gemäss Figur 9 bis 12 entsprechend bei den Stegen oder Verbindungsstellen gemäss Figur 1 bis 8 einsetzen, ohne dass dadurch der Rahmen der Erfindung verlassen würde.

Ausser den genannten Materialien lassen sich auch andere Polymere oder z.B. auch PE und PP-Co-Polymere einsetzen.

## Patentansprüche

1. Garantieverschluss (1) zum Verschliessen eines Behälters mit einer Kunststoff-Verschlusskappe (2) mit Kappenboden (2a) und zylindrischem Kappen-Mantel (2b) und einem Garantieband (3), das form- und/oder kraftschlüssig mit dem Behälter in Eingriff bringbar ist, sowie wenigstens einer Sollreiss-Linie (6) zum Trennen des Garantiebands (3) von der Verschlusskappe (2), dadurch gekennzeichnet, dass die Verschlusskappe (2) und das Garantieband (3) in getrennten, aufeinander folgenden Giessverfahren, insbesondere durch Spritzguss und/oder Compression Molding hergestellte Teile sind, dass die Verschlusskappe (2) und das Garantieband (3) mit einer durch das zweite Giessverfahren gebildeten Verbindungsstelle (5) verbunden sind, wobei die Verbindungsstelle (5) die Sollreisslinie (6) bildet.

2. Garantieverschluß nach Anspruch 1, dadurch gekennzeichnet, dass die Verbindungsstelle (5) oder die Verbindungsstellen (5, 5a, 5b, 5c, 5d), an denen das Garantieband (3) an die Verschlusskappe (2) angeformt ist, als Sollreiss-Linie (6) ausgebildet ist.

3. Garantieverschluß nach Anspruch 1 oder 2, dadurch gekennzeichnet, dass das Garantieband (3) entlang einer linienförmigen Verbindungsstelle (5) mit der Verschlusskappe (2) verbunden ist.

4. Garantieverschluß nach einem der vorangegangenen Ansprüche, dadurch gekennzeichnet, dass das Garantieband (3) einen oder mehrere Verbindungsstege (7, 7a, 7b) aufweist und dass die Verbindungsstege an der Verschlusskappe (2) nachträglich angespritzt sind.

5. Garantieverschluß nach einem der vorangegangenen Ansprüche, dadurch gekennzeichnet, dass die Verbindungsstelle oder die Verbindungsstellen (5, 5a, 5b, 5c) zwischen Verschlusskappe (2) und Garantieband (3) wenigstens einen Bereich mit wenigstens einer Hinterschneidung (8, 14) aufweisen.

6. Garantieverschluß nach Anspruch 4 oder 5, dadurch gekennzeichnet, dass die Verbindungsstelle oder die Verbindungsstellen (5a, 5b) zwischen Verschlusskappe (2) und Garantieband (3) schräg zur Kappen-Längsachse verlaufen und dass die Verbindungsstelle (5a, 5b) unter einem solchen Winkel zur Kappenlängsachse angeordnet sind, dass die beim Verschliessen vom Garantieband über die Verbindungsstellen (5a, 5b) ausgeübte Kraft etwa quer zur Verbindungsstelle (5a) und/oder im wesentlichen parallel zur Verbindungsstelle (5b) gerichtet ist.

7. Garantieverschluss nach Anspruch 6, dadurch gekennzeichnet, dass die Verbindungsstege (7a) und/oder die Verbindungsstellen (5b) unter einem Winkel α 20° bis 45° zur Kappen-Längsachse verlaufen.

8. Garantieverschluss nach Anspruch 7, dadurch gekennzeichnet, dass der Winkel α etwa 30° beträgt.

9. Garantieverschluss nach einem der Ansprüche 4 bis 8, dadurch gekennzeichnet, dass die Verbindungsstege (7a) in einer Ausnehmung (9) im Kappenmantel (2b) angeordnet sind.

10. Garantieverschluss nach einem der Ansprüche 4 bis 9, dadurch gekennzeichnet, dass die Verbindungsstellen (5a) unter einem Winkel von etwa 90° zur Richtung R der Kraft verlaufen, die beim Verschliessen der Schraubkappe (2) vom Garantieband (3) über die Stege (7a) übertragen wird.

11. Garantieverschluss nach einem der Ansprüche 4 bis 10, dadurch gekennzeichnet, dass an der Schraubkappe (2) und/oder am Verbindungssteg (7a) wenigstens eine Stützfläche (10) zum Abstützen des Verbindungsstegs gegen Ablösung und Deformation beim Aufbringen auf einen Behälter vorgesehen ist.

12. Garantieverschluss nach einem der vorangegangenen Ansprüche, dadurch gekennzeichnet dass, an der Schraubkappe (2) und/oder am Verbindungssteg (7a) wenigstens eine Einkerbung (11, 12) in Fortsetzung der Verbindungsfläche (5a, 5b) zur Förderung des Abreissvorgangs beim Öffnen der Verschlusskappe (2) vorgesehen ist.

13. Verfahren zum Herstellen eines Garantieverschlusses nach einem der vorangegangenen Ansprüche, dadurch gekennzeichnet, dass das Garantieband (3) in einem zweiten Giessvorgang an die in einem ersten Giessvorgang vorgefertigte Verschlusskappe (2) angegossen wird.

14. Verfahren nach Anspruch 13, dadurch gekennzeichnet, dass das Garantieband (3) im Spritzgussverfahren angespritzt wird.

15. Verfahren nach Anspruch 14, dadurch gekennzeichnet, dass das Garantieband (3) im Compression Molding Verfahren angeformt wird.

## Claims

1. A guarantee closure (1) for closing a container comprising a plastics closure cap (2) with a cap end portion (2a) and a cylindrical cap wall portion (2b) and a guarantee strip (3) which can be brought into positively locking and/or force-locking engagement with the container, and at least one desired-tear line (6) for separating the guarantee strip (3) from the closure cap (2), characterised in that the closure cap (2) and the guarantee strip (3) are parts produced in separate successive moulding processes, in particular by injection moulding and/or compression moulding, and that the closure cap (2) and the guarantee strip (3) are connected with a connecting location (5) formed by the second moulding process, the connecting location (5) forming the desired-tear line (6).

2. A guarantee closure according to claim 1 characterised in that the connecting location (5) or the connecting locations (5, 5a, 5b, 5c, 5d) at which the guarantee strip (3) is moulded on to the closure cap (2) is in the form of the desired-tear line (6).

3. A guarantee closure according to claim 1 or claim 2 characterised in that the guarantee strip (3) is connected to the closure cap (2) along a linear connecting location (5).

4. A guarantee closure according to one of the preceding claims characterised in that the guarantee strip (3) has one or are connecting legs (7, 7a, 7b) and that the connecting legs are subsequently injection-moulded on the closure cap (2).

5. A guarantee closure according to one of the preceding claims characterised in that the connecting location or the connecting locations (5, 5a, 5b, 5c) between the closure cap (2) and the guarantee strip (3) have at least one region with at least one undercut portion (8, 14).

6. A guarantee closure according to claim 4 or claim 5 characterised in that the connecting location or the connecting locations (5a, 5b) between the closure cap (2) and the guarantee strip (3) extend inclinedly relative to the cap longitudinal axis and that the connecting locations (5a, 5b) are arranged at such an angle to the cap longitudinal axis that the force exerted when closing the guarantee strip by way of the connecting locations (5a, 5b) is directed approximately transversely relative to the connecting location (5a) and/or substantially parallel to the connecting location (5b).

7. A guarantee closure according to claim 6 characterised in that the connecting legs (7a) and/or the connecting locations (5b) extend at an angle α of 20° to 45° relative to the cap longitudinal axis.

8. A guarantee closure according to claim 7 characterised in that the angle α is about 30°.

9. A guarantee closure according to one of claims 4 to 8 characterised in that the connecting legs (7a) are arranged in an opening (9) in the cap wall portion (2b).

10. A guarantee closure according to one of claims 4 to 9 characterised in that the connecting locations (5a) extend at an angle of about 90° relative to the direction R of the force which is transmitted upon closure of the screw cap (2) by the guarantee strip (3) by way of the legs (7a).

11. A guarantee closure according to one of claims 4 to 10 characterised in that provided on the screw cap (2) and/or on the connecting leg (7a) is at least one support surface (10) for supporting the connecting leg to prevent separation and deformation upon being fitted on to a container.

12. A guarantee closure according to one of the preceding claims characterised in that provided on the screw cap (2) and/or on the connecting leg (7a) is at least one notch (11, 12) as a prolongation of the connecting surface (5a, 5b) to promote the tear-off effect when opening the closure cap (2).

13. A process for the production of a guarantee closure according to one of the preceding claims characterised in that in a second moulding operation the guarantee strip (3) is moulded on to the closure cap (2) which is prefabricated in a first moulding operation.

14. A process according to claim 13 characterised in that the guarantee strip (3) is injection moulded in position in an injection moulding process.

15. A process according to claim 14 characterised in that the guarantee strip (3) is moulded in position in a compression moulding process.

## Revendications

1. Couvercle de garantie (1) pour fermer un récipient, composé d'une capsule en matière plastique (2) comprenant un fond (2a) et une enveloppe cylindrique (2), d'une bande de garantie (3) qui est apte à être mise en prise par complémentarité de forme et/ou par force avec le récipient, et d'au moins une ligne de rupture (6) pour séparer la bande de garantie (3) de la capsule (2), caractérisé en ce que la capsule (2) et la bande de garantie (3) sont des éléments fabriqués à l'aide de procédés de moulage séparés successifs, notamment par moulage par injection et/ou par moulage par compression, et en ce que la capsule (2) et la bande de garantie (3) sont reliées par un point de liaison (5) formé par le second procédé de moulage, le point de liaison (5) formant la ligne de rupture (6).

2. Couvercle de garantie selon la revendication 1, caractérisé en ce que le point de liaison (5) ou les points de liaison (5, 5a, 5b, 5c, 5d) au niveau desquels la bande de garantie (3) est rapportée sur la capsule (2) sont conçus sous la forme d'une ligne de rupture (6).

3. Couvercle de garantie selon la revendication 1 ou 2, caractérisé en ce que la bande de garantie (3) est reliée à la capsule (2) le long d'un point de liaison linéaire (5).

4. Couvercle de garantie selon l'une des revendications précédentes, caractérisé en ce que la bande de garantie (3) comporte une ou plusieurs pattes de liaison (7, 7a, 7b) et en ce que les pattes de liaison sont rapportées sur la capsule (2) par injection par la suite.

5. Couvercle de garantie selon l'une des revendications précédentes, caractérisé en ce que le point de liaison ou les points de liaison (5, 5a, 5b, 5c) entre la capsule (2) et la bande de garantie (3) comportent au moins une zone pourvue d'au moins une dépouille (8, 14).

6. Couvercle de garantie selon la revendication 4 ou 5, caractérisé en ce que le point de liaison ou les points de liaison (5a, 5b) entre la capsule (2) et la bande de garantie (3) sont inclinés par rapport à l'axe longitudinal de la capsule et en ce que les points de liaison (5a, 5b) sont disposés par rapport à l'axe longitudinal de la capsule suivant un angle tel que la force exercée par la bande de garantie sur les points de liaison (5a, 5b), lors de la fermeture, est à peu près transversale par rapport au point de liaison (5a) et/ou globalement parallèle au point de liaison (5b).

7. Couvercle de garantie selon la revendication 6, caractérisé en ce que les pattes de liaison (7a) et/ou les points de liaison (5b) définissent un angle α de 20° à 45° par rapport à l'axe longitudinal de la capsule.

8. Couvercle de garantie selon la revendication 7, caractérisé en ce que l'angle α est d'environ 30°.

9. Couvercle de garantie selon l'une des revendications 4 à 8, caractérisé en ce que les pattes de liaison (7a) sont disposées dans un creux (9) de l'enveloppe de capsule (2b).

10. Couvercle de garantie selon l'une des revendications 4 à 9, caractérisé en ce que les points de liaison (5a) définissent un angle d'environ 90° par rapport au sens R de la force qui est transmise par la bande de garantie (3) par l'intermédiaire des pattes (7a), lors de la fermeture de la capsule à vis (2).

11. Couvercle de garantie selon l'une des revendications 4 à 10, caractérisé en ce qu'il est prévu sur la capsule à vis (2) et/ou sur la patte de liaison (7a) au moins une surface d'appui (10) pour l'appui de la patte de liaison à l'encontre d'un détachement et d'une déformation lors de la pose sur un récipient.

12. Couvercle de garantie selon l'une des revendications précédentes, caractérisé en ce qu'il est prévu sur la capsule à vis (2) et/ou sur la patte de liaison (7a) au moins une encoche (11, 12) dans le prolongement de la surface de liaison (5a, 5b), pour favoriser la rupture lors de l'ouverture du couvercle (2).

13. Procédé pour la fabrication d'un couvercle de garantie selon l'une des revendications précédentes, caractérisé en ce que la bande de garantie (3) est rapportée par moulage lors d'une seconde opération de moulage sur la capsule (2) préfabriquée lors d'une première opération de moulage.

14. Procédé selon la revendication 13, caractérisé en ce que la bande de garantie (3) est rapportée grâce à un procédé de moulage par injection.

15. Procédé selon la revendication 14, caractérisé en ce que la bande de garantie (3) est rapportée grâce à un procédé de moulage par compression.
